# FASCICULE DE BREVET EUROPEEN

(11) **EP 1 012 089 B1**
(45) Date de publication et mention de la délivrance du brevet: **26.06.2002**
(21) Numéro de dépôt: 98942756.2
(22) Date de dépôt: 19.08.1998
(51) Int. Cl.: B65G 51/03

(54) **CONVOYEUR PNEUMATIQUE POUR ARTICLES, AVEC CAISSON DE TRANSPORT, PERMETTANT DE MINIMISER LE DEGRE DE CONTAMINATION DES ARTICLES, ET PROCEDE DE NETTOYAGE D'UN TEL CONVOYEUR**
PNEUMATISCHE FÖRDERVORRICHTUNG FÜR GEGENSTÄNDE MIT FÖRDERKASTEN, GEEIGNET ZUR MINIMIERUNG DES VERSCHMUTZUNGSGRADES DER GEGENSTÄNDE UND REINIGUNGSVORRICHTUNG SOLCHER FÖRDERER
PNEUMATIC CONVEYOR FOR ARTICLES, WITH TRANSPORTING CASE, FOR MINIMISING THE LEVEL OF CONTAMINATION OF ARTICLES, AND METHOD FOR CLEANING SUCH A CONVEYOR

(30) Priorité: 12.09.1997 FR 9711599
(43) Date de publication de la demande: 28.06.2000
(73) Titulaire: Netra Systems, 59700 Marcq en Baroeul (FR)
(72) Inventeur: CARLIER, Michel, B-7540 Kain (BE); COLAS, Sandrine, F-59700 Marcq en Baroeul (FR)
(74) Mandataire: Matkowska, Franck
(86) Numéro de dépôt international: FR9801823
(87) Numéro de publication internationale: WO9914143

(56) Documents cités:
- EP-A- 0 070 931
- EP-A- 0 079 131
- EP-A- 0 526 163
- EP-A- 0 790 200
- WO-A-95/08498
- US-A- 4 284 370
- US-A- 5 628 588

## Description

La présente invention concerne le transport d'articles sous l'action de jets d'air, les articles étant supportés et guidés, lors de leur mise en mouvement, par l'intermédiaire d'une protubérance, et en particulier mais non exclusivement d'une collerette formant protubérance au niveau de leur col. Elle s'applique plus particulièrement au transfert en ligne d'articles légers, tels que des récipients (bouteilles, flacons....) en plastique (PET, PVC...), ou encore de paraison pour la formation ultérieurement de récipients plastiques par étirage soufflage. L'invention a plus précisément pour objets un convoyeur pneumatique pour articles, qui est conçu en sorte de limiter le phénomène de contamination et notamment de contamination bactérienne, particulaire bactérienne, fongique (spore, microalgue, etc...) de ces articles, lors de leur transport, ainsi qu'un procédé de nettoyage d'un tel convoyeur.

Dans le domaine du transfert pneumatique de récipients comportant une collerette formant protubérance au niveau de leur col, et plus particulièrement dans le domaine de l'embouteillage de bouteilles vides, il est à ce jour largement répandu d'utiliser des convoyeurs pneumatiques, dans lesquels les récipients sont supportés et guidés dans un canal de guidage, par l'intermédiaire de leur collerette, et sont mis en mouvement unitairement les uns derrière les autres ou, par trains entiers, sous l'action de jets d'air, répartis sur toute la longueur du parcours des récipients.

Il a par exemple été décrit dans la demande de brevet européen EP 070 931, ou encore dans le brevet américain correspondant US 4 284 370, un convoyeur pneumatique de bouteilles vides, dont les moyens de transfert par jets d'air consistent en un caisson de soufflage à section rectangulaire, à l'intérieur duquel est injecté de l'air. La face inférieure de ce caisson de soufflage comporte un décrochement intérieur central, qui est équipé de moyens pour le guidage des bouteilles par l'intermédiaire d'une protubérance de leur col, et possède au niveau de ce décrochement, une pluralité d'ouvertures permettant de diriger l'air injecté dans le caisson de soufflage sur le goulot des bouteilles, au-dessus de la protubérance de leur col. Dans le but d'améliorer le convoyage de ces bouteilles, ce convoyeur pneumatique comporte en outre deux parois latérales, qui sont fixées de part et d'autre du canal de guidage des bouteilles, et qui ont pour but de canaliser l'air résiduel sur le corps de ces bouteilles.

Après avoir effectué des essais sur ce type de convoyeur pour transporter les bouteilles en plastique et notamment en PET, PVC. etc..., la demanderesse a constaté que l'utilisation de parois latérales trop rapprochées provoquait une canalisation de l'air entre ces deux parois, qui était en réalité trop importante et qui contrairement à l'enseignement des deux documents précités, pouvait nuire à un bon convoyage des bouteilles. En effet, cet air canalisé entre les deux parois exerce sur le corps des bouteilles des forces de pression dont la résultante est appliquée au-dessous du point de pivotement de ces bouteilles, c'est-à-dire au-dessous de la protubérance de leur col, ce qui a tendance à les faire basculer hors de leur position verticale et à les coincer dans le convoyeur.

Un autre inconvénient de ce type de convoyeur réside dans le phénomène de contamination à l'intérieur de chaque bouteille vide, lors de son transport. Jusqu'à présent, il a toujours été considéré que ce phénomène de contamination provenait de l'air qui était injecté au niveau du goulot des récipients. Une première solution pour essayer de palier ce problème a donc consisté à filtrer cet air injecté, préalablement à son introduction dans le caisson de soufflage, afin d'en garantir la propreté ; une deuxième solution, préconisée dans la demande de brevet européen EP.526.963, a été d'injecter cet air, non plus au-dessus, mais au-dessous de la protubérance de leur col, afin que l'air injecté ne puisse pas pénétrer dans les bouteilles.

Après avoir mené des essais, la demanderesse a constaté que ces deux solutions n'étaient pas satisfaisantes, et que, dans les deux cas, le degré de contamination à l'intérieur des récipients ne pouvait être garanti. Au cours de ces essais, la demanderesse a en outre mis en évidence que l'air, qui était injecté sur les bouteilles pour permettre leur transfert pneumatique, induisait à la périphérie de ces bouteilles, un air ascendant à vitesse élevée qui entraînait avec lui, jusque dans la région du goulot des bouteilles, les agents contaminants (poussières, bactéries, spores, microalgues...) de l'air environnant le convoyeur. Partant de ce constat majeur, la demanderesse en a conclu que le phénomène de contamination des bouteilles, n'était pas dû principalement à l'air qui était injecté directement sur ces bouteilles, contrairement à ce qui avait été jusqu'à présent considéré, mais que cette contamination provenait en majeure partie des agents contaminants de l'atmosphère dans laquelle était placé le convoyeur.

En utilisant un convoyeur pneumatique à parois latérales, tel que celui décrit dans le document EP 070 931, la demanderesse a constaté qu'en présence de bouteilles on limitait l'air induit ascendant entre les deux parois latérales. Cependant, il convient de remarquer qu'en pratique l'injection d'air dans le caisson de soufflage pour le transfert pneumatique des bouteilles est réalisée de manière continuelle, même lorsque la machine de production de bouteilles en amont de ce convoyeur ou de la machine d'embouteillage située en aval sont arrêtées. Pour la création du flux d'air à l'intérieur du caisson de soufflage, les convoyeurs pneumatiques actuels utilisent d'ailleurs des ventilateurs à variation de vitesse conçus pour fonctionner à une vitesse basse utilisée notamment la nuit lorsque la production de bouteilles est arrêtée, et une vitesse haute, lorsque l'installation d'embouteillage est en régime normal de production. En outre, même lorsque l'installation d'embouteillage fonctionne en régime normal, les trains de bouteilles véhiculés par les convoyeurs pneumatiques ne sont pas continus. Il en résulte, que même dans le cas où l'on utilise un convoyeur pneumatique à parois latérales, on favorise la création d'un air induit ascendant qui vient, en l'absence de bouteilles, déposer les poussières et bactéries de l'air environnant le convoyeur, dans le canal de guidage des bouteilles. En fonction du degré de propreté de cet air environnant, on obtient donc un encrassement à plus ou moins long terme de ce canal de guidage. Cet encrassement combiné à l'action de l'air issu du caisson de soufflage entraîne une salissure préjudiciable de l'intérieur des bouteilles. Par conséquent, dans le cas de convoyeurs pneumatiques à parois latérales, pour éviter la contamination bactérienne des bouteilles, il est impératif de nettoyer fréquemment le canal de guidage, qui par ailleurs n'est pas facilement accessible du fait de la présence des deux parois latérales. Ces opérations de nettoyage sont donc délicates, et entraînent un surcoût de maintenance du convoyeur.

Enfin, pour qu'en présence de bouteilles, le flux d'air induit ascendant soit suffisamment faible, il est impératif que les deux parois latérales soient fixées au plus près des bouteilles, c'est-à-dire soient le plus proche possible l'une de l'autre. Cette contrainte pour limiter la création du flux d'air est donc incompatible avec celle du bon convoyage des bouteilles, l'amélioration de l'une de ces deux contraintes se faisant au détriment de l'autre.

Le but de la présente invention est de proposer un convoyeur pneumatique qui permet de limiter la contamination des articles et l'encrassement du canal de guidage, sans dégradation de la convoyabilité des articles et sans augmentation significative de l'encombrement du convoyeur par rapport aux convoyeurs existants.

La solution de l'invention consiste à équiper le convoyeur pneumatique d'un caisson de transport qui comprend deux parois latérales longitudinales, une paroi supérieure et une paroi inférieure, à l'intérieur duquel est logé le canal de guidage, et dans lequel les articles sont destinés à être transportés ; dans une paroi du caisson de transport est en outre prévue au moins une ouverture d'échappement d'air. Dans une première variante, l'ouverture d'échappement d'air est raccordée à des moyens de reprise d'air par aspiration ; dans une seconde variante, l'ouverture d'échappement d'air débouche à l'air libre et est équipée d'un organe d'échappement unidirectionnel permettant un échappement d'air par cette ouverture depuis l'intérieur du caisson de transport vers l'extérieur, tout en bloquant le passage à un flux d'air induit entrant. Cet organe sera plus particulièrement un filtre permettant de créer une perte de charge à l'échappement suffisante, ou encore une vanne ou une soupape anti-retour.

Le caisson de transport permet lorsqu'il est raccordé en entrée avec une machine amont, par exemple une machine de production de bouteilles vides en ligne, et en sortie à une machine aval, par exemple une soutireuse pour le remplissage de bouteilles vides, de délimiter une enceinte isolant les articles transportés de l'air ambiant dans lequel se trouve le convoyeur et par là-même de limiter les phénomènes de contamination au contact de cet air ambiant. Dans la première variante, les moyens de reprise d'air par aspiration présentent principalement trois avantages. Ils permettent d'éviter l'entrée d'un flux d'air induit à l'intérieur du caisson de transport, comparativement par exemple à un caisson de transport muni d'orifices d'échappement libre, ou encore à l'utilisation simplement de deux parois latérales longitudinales de part et d'autre du chemin de transport des récipients. Ils permettent en outre d'utiliser un caisson de transport non volumineux dont les parois longitudinales sont relativement proches l'une de l'autre, car ils autorisent un maintien de la pression à l'intérieur du caisson de transport à un niveau suffisamment faible pour ne pas dégrader la convoyabilité des récipients. Enfin, ils permettent un réglage de la pression à l'intérieur du caisson de transport. Dans la seconde variante, l'ouverture d'échappement permet avantageusement de faire communiquer l'intérieur du caisson avec l'air libre, et par là-même de maîtriser une suppression à l'intérieur du caisson car une suppression trop forte serait préjudiciable à la convoyabilité des articles. L'organe d'échappement unidirectionnel est essentiel pour éviter la contamination des articles par un flux d'air induit depuis l'extérieur vers l'intérieur du caisson.

De préférence, le caisson de transport est étanche au moins à l'air, et éventuellement aux liquides, à l'exception uniquement de ses deux faces d'extrémité ouvertes pour l'entrée et la sortie des récipients. Dans ce cas il est avantageusement mis en oeuvre dans une ligne de convoyage pneumatique d'articles en étant raccordé de manière étanche en amont et en aval, c'est-à-dire au niveau de ses deux faces d'extrémité ouvertes.

Selon un perfectionnement apporté à la première variante précitée, l'air repris par aspiration à l'intérieur du caisson de transport est réutilisé en circuit fermé en étant refoulé à l'intérieur du caisson de transport pour le transfert par jets d'air des articles. Plus particulièrement, les moyens de transfert par jets d'air et les moyens de reprise par aspiration de l'air à l'intérieur du caisson de transport comprennent au moins un ventilateur dont l'entrée d'aspiration et la sortie de refoulement sont respectivement raccordées de manière étanche avec l'intérieur du caisson de transport.

Selon une caractéristique additionnelle de l'invention, le convoyeur comprend des moyens d'aspiration / refoulement qui communiquent en entrée (aspiration) avec l'air libre, et en sortie (refoulement) avec l'intérieur du caisson de transport, qui sont équipés de moyens de filtration d'air, et qui permettent de réaliser un apport d'un air propre complémentaire pour le transfert des articles. Dans le cadre de la variante préférée de réalisation précitée, ces moyens d'aspiration / refoulement seront avantageusement constitués par le ventilateur fonctionnant en circuit fermé, lequel ventilateur comprend plus particulièrement une entrée d'admission d'air supplémentaire communiquant à l'air libre et est équipé de moyens de filtration en aval de cette entrée d'admission d'air.

Avantageusement, le convoyeur comprend plus particulièrement des moyens de réglage automatique du débit d'air des moyens d'aspiration / refoulement, en fonction d'une pression mesurée dans le circuit d'air et de préférence à l'intérieur du caisson de transport. La caractéristique additionnelle de l'invention relative à l'utilisation en combinaison de moyens d'aspiration / refoulement à débit d'air réglable, et de moyens de réglage automatique du débit d'air de ces moyens d'aspiration / refoulement en fonction de la pression mesurée à l'intérieur du caisson est nouvelle en soit et n'est pas nécessairement liée au concept général de convoyeur selon la revendication principale. Cette caractéristique additionnelle peut ainsi également être mise en oeuvre dans tout type de convoyeur connu à ce jour, et notamment dans les convoyeurs décrits dans les demandes de brevets européens EP 079 131 et EP 526 163.

Ces moyens de réglage automatique sont de préférence conçus pour maintenir la pression mesurée à l'intérieur du caisson de transport au voisinage d'une pression de consigne prédéterminée, pour laquelle la convoyabilité des articles est jugée satisfaisante.

L'invention a pour autre objet un procédé de nettoyage du convoyeur de l'invention consistant principalement à pulvériser sous forme de brouillard un désinfectant liquide à l'intérieur du caisson de transport, en sorte de saturer le caisson en produit désinfectant. Cette opération de nettoyage est réalisée lorsque le convoyeur est à l'arrêt et ne transporte pas d'article. Une autre solution pour nettoyer le transporteur pourrait consister à remplir le caisson de transport avec un liquide désinfectant. Dans ce cas il s'avère nécessaire de rincer dans une étape supplémentaire le caisson de transport. Comparativement à cette autre solution, la solution de l'invention présente donc l'avantage d'une part d'être plus simple et plus rapide à mettre en oeuvre, ce qui permet d'éviter des temps d'arrêt de fonctionnement trop importants du convoyeur, et d'autre part d'utiliser un volume de produits désinfectants plus faible, ce qui rend la solution de l'invention moins onéreuse.

De préférence, la pulvérisation d'un produit désinfectant sera effectuée au moyen d'une pluralité de buses de pulvérisation réparties sur la longueur du caisson de transport. Ces buses pourront être fixées à demeure sur le caisson de transport, où être montées sur un système mobile à fixation rapide.

Le procédé de nettoyage d'un convoyeur selon l'invention est nouveau en soit, et n'est pas nécessairement lié à la structure de convoyeur selon l'invention faisant l'objet de la revendication principale. Ce procédé peut avantageusement également être mis en oeuvre dans tout type de convoyeur connu à ce jour, tel que par exemple les convoyeurs décrits dans les demandes de brevets européens EP 070 931 et EP 526 963.

D'autres caractéristiques et avantages de l'invention apparaîtront plus clairement à la lecture de la description ci-après d'un exemple préféré de réalisation d'un convoyeur pneumatique pour récipients selon l'invention, laquelle description est donnée à titre d'exemple non limitatif et en référence au dessin annexé sur lequel :
- la figure 1 est une vue en perspective d'un tronçon de convoyeur pneumatique conforme à l'invention,
- la figure 2 est une représentation schématique du circuit d'alimentation en air du convoyeur de la figure 1,
- la figure 3 représente un synoptique des moyens de commande du moteur du ventilateur du convoyeur des figures 1 et 2 à partir d'une mesure de la pression à l'intérieur du caisson de transport,
- et la figure 4 est une vue en perspective d'un tronçon de convoyeur pneumatique de l'invention selon une autre variante de réalisation simplifiée.

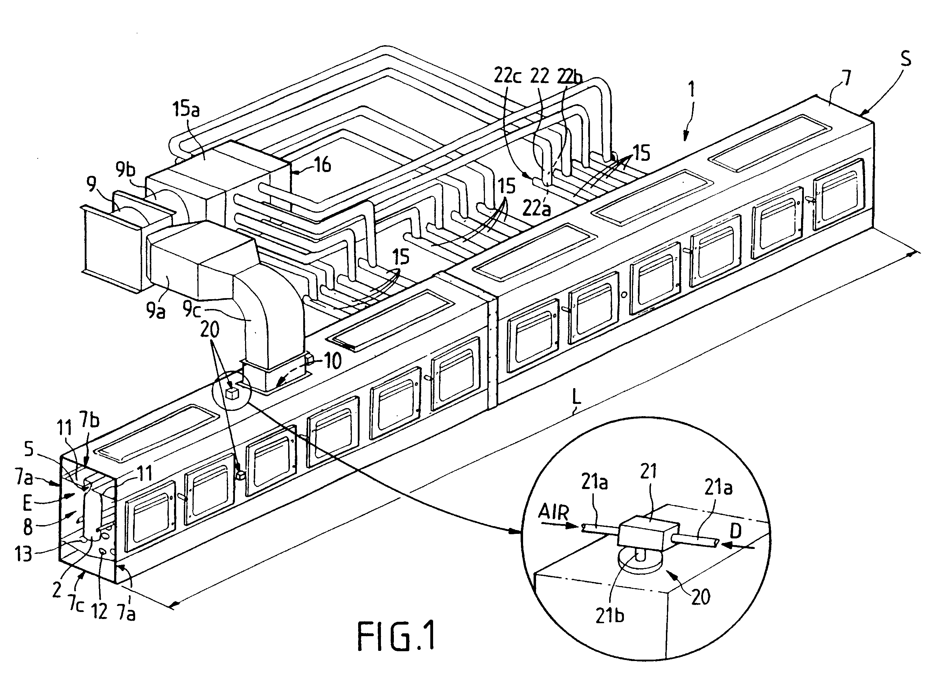

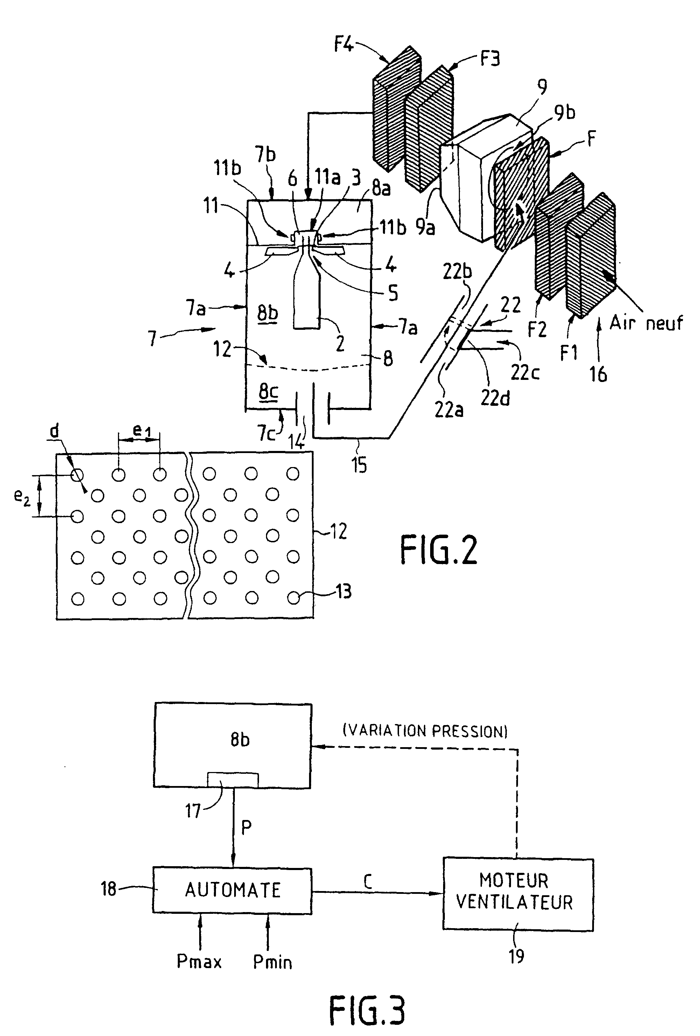

On a représenté aux figures 1 et 2 un tronçon de convoyeur pneumatique 1 conforme à l'invention, de longueur L, utilisé pour transporter sous l'action de jets d'air des bouteilles 2 comportant une collerette 3 formant protubérance au niveau de leur col. Les bouteilles 2 sont de manière usuelle supportées, par l'intermédiaire de leur collerette 3, par deux guides sous-col 4 longitudinaux délimitant entre eux un canal de guidage longitudinal 5 (figure 2). Dans l'exemple particulier illustré, le transfert des bouteilles 2 le long du canal de guidage est réalisé en soufflant de l'air au niveau du col des bouteilles 2, au-dessus de leur collerette 3, dans un canal de soufflage 6 longitudinal. Dans le cadre de l'invention, le transfert des bouteilles pourrait également être réalisé en soufflant de l'air dans la direction de transport au niveau du corps des bouteilles 2, c'est-à-dire au-dessous du niveau de la collerette 3 des bouteilles.

Selon une première caractéristique essentielle de l'invention, le convoyeur 1 comporte un caisson de transport 7, qui dans l'exemple illustré forme un parallélépipède rectangle. Ce caisson de transport 7 comporte deux parois latérales longitudinales 7a, une paroi supérieure 7b et une paroi inférieure 7c. Il délimite une enceinte 8 à l'intérieur de laquelle est logé le canal de guidage 5 et sont transportés les bouteilles 2 les unes derrières les autres.

Dans l'exemple particulier illustré, le caisson de transport 7 se décompose en trois compartiments superposés, un premier compartiment 8a, un deuxième compartiment intermédiaire 8b, et un troisième compartiment inférieur 8c. Le compartiment supérieur 8a est raccordé de manière étanche à la sortie de refoulement 9a d'un ventilateur 9. Dans l'exemple illustré à la figure 1 la sortie de refoulement 9a du ventilateur 9 communique avec l'intérieur du compartiment de soufflage 8a par l'intermédiaire d'un raccord 9c dont l'extrémité opposée au ventilateur 9 est fixée de matière étanche dans une ouverture 10 prévue dans la paroi supérieure 7b du caisson de transport 7. La paroi intérieure 11 qui sépare le compartiment de soufflage supérieur 8a du compartiment intermédiaire 8b présente un décrochement central longitudinal 11a, en forme de U, qui délimite le canal de soufflage 6. Le canal de soufflage 6 communique avec le compartiment de soufflage 8a par l'intermédiaire d'ouvertures 11b (figure 2) prévues dans les parois latérales du décrochement 11a formant le canal de soufflage. Ces ouvertures 11b sont de manière usuelle réparties sur toute la longueur du canal de soufflage 6. L'air refoulé par le ventilateur 9 à l'intérieur du compartiment de soufflage 8a s'échappe à l'intérieur du canal de soufflage 6 sous la forme d'une multitude de jets d'air de transfert orientés dans la direction de transport en direction du col des bouteilles 2.

Le deuxième compartiment 8b correspond au compartiment de transport proprement dit des bouteilles 2, et est séparé du compartiment inférieur 8c par une paroi 12 de répartition d'air dans laquelle sont réalisées une pluralité d'ouvertures 13 mettant en communication les deux compartiments 8b et 8c.

La paroi inférieure 7c du caisson de transport 7, qui correspond à la paroi inférieure du compartiment 8c comporte une pluralité d'ouvertures d'échappement d'air 14 qui dans l'exemple de réalisation illustré sont raccordées de manière étanche à l'entrée d'aspiration 9b du ventilateur 9, par l'intermédiaire de canalisations 15, et d'un compartiment de reprise 15a qui est positionné en amont de l'entrée d'aspiration 9b du ventilateur 9 et dans lequel débouchent les canalisations de reprise d'air 15. De préférence, immédiatement entre l'entrée d'aspiration 9b et le compartiment 15a est prévu un filtre F permettant de nettoyer l'air repris par aspiration dans le compartiment 8c avant son entrée dans le ventilateur 9.

L'air repris par aspiration dans le compartiment inférieur du caisson de transport 7 par les ouvertures d'échappement d'air 14 circule donc en circuit fermé en étant refoulé par le ventilateur 9 dans le compartiment de soufflage supérieur 8a, en sorte d'assurer le transfert des bouteilles. En aval de la sortie de refoulement 9a du ventilateur 9 sont prévus des moyens de filtration qui dans l'exemple illustré se présentent sous la forme de deux étages de filtration successifs F3 et F4. Ces moyens de filtration F3, F4 interposés entre la sortie du ventilateur 9 et l'entrée du compartiment de soufflage 8a sont prévus essentiellement pour éviter une contamination de l'intérieur du compartiment de soufflage au cas où le ventilateur 9 et/ou ses raccords d'entrée et de sortie ne seraient pas parfaitement étanches à l'air. En effet, dans une telle éventualité, les moyens de filtration F3, F4 permettent avantageusement de filtrer tout flux d'air de fuite pénétrant dans le circuit au niveau du ventilateur 9. De préférence, les étages de filtration F3, F4 sont positionnés au plus près de l'entrée du compartiment de soufflage 8a et sont réalisés à partir de filtres absolus.

Dans l'exemple préféré de réalisation illustré aux figures 1 et 2, le ventilateur 9 comprend en outre une entrée d'admission d'air neuf 16 qui débouche à l'air libre dans l'environnement ambiant du convoyeur. Cette entrée d'admission d'air 16 est située en amont du compartiment de reprise d'air 15a. Entre le compartiment de reprise d'air 15a et cette entrée d'admission d'air 16 sont prévus des moyens de filtration supplémentaires, qui permettent de nettoyer l'air qui est aspiré dans l'environnement ambiant du convoyeur. Dans l'exemple particulier illustré (figure 2), ces moyens de filtration se présentent sous la forme de deux étages de filtration successifs réalisés à partir d'un premier filtre gravimétrique F1 et d'un second filtre opacimétrique F2.

L'air neuf ainsi aspiré et filtré est utilisé en complément de l'air repris par aspiration dans le compartiment inférieur 8c du caisson de transport 7, pour assurer le transfert par jets d'air des bouteilles 2. Cet apport d'air neuf permet avantageusement, en ajustant la vitesse de rotation du ventilateur 9, d'ajuster le débit d'air à l'entrée du compartiment de soufflage 8a, et par là même de contrôler la pression à l'intérieur du compartiment de transport 8b, tel que cela sera décrit ultérieurement en référence à la figure 3.

Le convoyeur de l'invention, dont un exemple préféré de réalisation vient d'être décrit en référence aux figures 1 et 2, est destiné à être mis en oeuvre dans une ligne de convoyage pneumatique de récipients en étant par exemple monté entre une machine amont tel qu'une machine de production de bouteilles vides en ligne, et une machine aval telle que par exemple une soutireuse permettant le remplissage en ligne des bouteilles vides. La machine amont est de préférence raccordée de manière étanche, à l'entrée du caisson de transport, c'est-à-dire avec la face d'extrémité transversale ouverte E dans le cas du tronçon de convoyeur de la figure 1, au moyen par exemple d'une bride correctement dimensionnée et munie d'un joint d'étanchéité. La sortie S du caisson de transport 7 est également raccordée, de préférence de manière étanche, à la machine aval. Enfin, le caisson de transport 7 est de préférence étanche à l'air ambiant, et éventuellement aux liquides, à l'exception bien entendu de ses deux faces d'extrémité ouvertes E et S pour l'entrée et la sortie des récipients. Une fois le convoyeur installé entre les deux machines, le caisson de transport 7 délimite ainsi avantageusement une enceinte de transport étanche permettant d'isoler les récipients transportés de l'environnement ambiant polluant du convoyeur. La caractéristique d'étanchéité du caisson de transport 7 permet avantageusement d'éviter tout risque d'induction d'air polluant depuis l'extérieur du caisson de transport et des machines amont et aval, vers l'intérieur du caisson de transport 7. En outre, l'air injecté dans le caisson de transport pour réaliser le convoyage des récipients étant filtré, on limite les risques de contamination bactérienne ou autre de l'intérieur du caisson de transport et des récipients transportés dans ce caisson. Les récipients qui sortent du caisson de transport 7 conservent donc le même état de propreté qu'ils avaient en entrant dans le convoyeur, et ce quel que soit le degré de pollution de l'environnement ambiant du convoyeur.

Dans l'exemple préféré qui vient d'être décrit, la paroi 12 a pour fonction de répartir de manière la plus homogène possible l'air aspiré par les ouvertures d'échappement 14 sur toute la longueur du convoyeur. Dans un exemple précis de réalisation donné à titre indicatif, cette paroi 12 était constituée par une tôle perforée, dont les perforations 13 avaient un diamètre d d'environ 30mm. Ces perforations étaient disposées en quinconce tel qu'illustré à la figure 2, avec un espace e₁ entre deux perforations successives dans le sens de la longueur de la tôle valant approximativement 100mm, et un espace e₂ entre deux perforations successives dans le sens transversal valant approximativement 50mm. De préférence, afin de faciliter l'écoulement de liquide lors du processus de nettoyage du caisson de transport décrit en détails ultérieurement, cette tôle perforée avait une forme légèrement en V avec la pointe du V à l'aplomb de l'alignement des ouvertures de reprise d'air par aspiration 14.

En fonctionnement, l'intérieur du compartiment de transport 8b est en surpression. Lorsque cette surpression est trop importante, les bouteilles 2 sont convoyées trop rapidement, et il y a un risque de blocage de ces bouteilles 2 dans le caisson de transport du fait notamment du balancement de ces bouteilles en cours de transport. Une surpression trop importante à l'intérieur du compartiment de transport 8b peut donc aboutir à une détérioration de la convoyabilité des bouteilles. Pour cette raison, il est préférable de contrôler la pression à l'intérieur du compartiment de transport 8b, et d'agir en conséquence sur la vitesse de rotation du ventilateur afin de maintenir la pression à l'intérieur du compartiment de transport 8b au-dessous d'un seuil maximal prédéterminé. A cet effet, dans un exemple préféré de réalisation, le caisson de transport 7 est équipé d'une pluralité de cellules pressostatiques 17, réparties sur toute la longueur du caisson de transport. En référence à la figure 3, chaque cellule pressostatique 17 fournit un signal de mesure de pression P à destination d'une entrée d'un automate 18, qui commande en sortie le moteur 19 du ventilateur 9 au moyen d'un signal de commande C. Cet automate reçoit en outre pour données d'entrée une pression de consigne maximale Pmax et une pression de consigne minimale Pmin, et est conçu pour régler la vitesse de rotation du moteur 19 par l'intermédiaire du signal de commande C en fonction des pressions P mesurées par les cellules pressostatiques 17 et des pressions de consigne Pmax et Pmin. Plus particulièrement, l'automate est par exemple programmé pour augmenter la vitesse du moteur 19 du ventilateur 9 tant qu'au moins une des pressions P mesurée est inférieure à la pression de consigne Pmin, ce qui se traduit par une augmentation de la pression à l'intérieur du compartiment de transport 8b, et pour au contraire diminuer la vitesse de rotation du moteur 19 tant qu'au moins une des pressions mesurées P est supérieure à la pression de consigne Pmax, ce qui se traduit par une diminution de la surpression à l'intérieur du compartiment de transport 8b.

Dans un exemple précis de réalisation donné à titre indicatif, la valeur des pressions de consignes Pmin et Pmax valaient respectivement 4 mm CE et 12 mm CE. Dans une variante de réalisation de l'invention, il est envisageable également d'équiper le caisson de transport de capteurs, tels que des cellules optiques ou ultrasons permettant de détecter dans une zone donnée une accumulation de bouteilles. Ces capteurs sont dans ce cas également reliés en entrée à l'automate 18, qui est conçu dans ce cas pour piloter le moteur 19 du ventilateur 9 également en fonction de l'information fournie par ces capteurs.

Dans l'exemple particulier de réalisation qui vient d'être décrit, la mesure de la pression est réalisée à l'intérieur du caisson de transport. Ceci n'est toutefois pas limitatif de l'invention. Il est en effet également envisageable de mesurer la pression en un tout autre point du circuit d'air, et par exemple au niveau du compartiment de reprise d'air 15a, à l'entrée du ventilateur 9, ou encore dans les canalisations 15 reliant le compartiment de reprise d'air 15a au caisson de transport.

Dans le but d'aseptiser l'intérieur du caisson de transport 7, celui-ci est dans une variante préférée de réalisation équipé de plusieurs buses de pulvérisation 20, dont au moins une communique avec le compartiment supérieur de soufflage supérieur 8a en étant par exemple fixée à travers la paroi supérieure 7b du caisson 7, et dont au moins une communique avec l'intérieur du compartiment de transport 8b en étant par exemple fixée à travers l'une des parois latérales 7a du caisson 7 (figure 1). Plus particulièrement, chaque buse de pulvérisation 20 comprend une chambre de mélange air/ liquide 21 avec deux entrées d'admission 21a et une sortie de pulvérisation 21b traversant la paroi correspondante du caisson de transport 7. L'entrée d'admission 21a est reliée à des moyens (non représentés) d'alimentation en air comprimé. L'autre entrée d'admission 21a est reliée à des moyens (non représentés) d'alimentation en désinfectant liquide. La buse de pulvérisation 20 produit en sortie à l'intérieur du compartiment correspondant du caisson de transport un brouillard désinfectant liquide sous forme de fines particules résultant du mélange air comprimé / désinfectant liquide. On pourra utiliser tout désinfectant liquide connu à ce jour et de préférence un désinfectant auto-séchant sur support alcoolique.

Les opérations de nettoyage du caisson de transport 7 sont réalisées alors que le convoyeur est à l'arrêt, c'est-à-dire lorsqu'il ne transporte aucune bouteille 2. Ces opérations de nettoyage consistent principalement à pulvériser, au moyen des buses de pulvérisation 20 qui dans l'exemple particulier illustré sont fixées à demeure sur le caisson de transport 7, un produit désinfectant sous forme de fines gouttelettes, en sorte de saturer l'intérieur du caisson de transport en produit désinfectant. Le produit désinfectant se pose par condensation sur les parois du caisson de transport et permet d'aseptiser l'intérieur de ce caisson au bout d'un laps de temps de réaction donné, qui est fonction du type de produit désinfectant utilisé et de sa concentration.

Dans l'exemple illustré, les buses de pulvérisation sont prévues au niveau des compartiments 8a, 8b , ceci n'est pas limitatif de l'invention. La pulvérisation pouvant également être réalisée au niveau du compartiment 8c, et il peut être suffisant d'une manière générale, qu'elle soit réalisée au niveau de l'un des compartiments 8a, 8b ou 8c. De préférence, elle sera néanmoins réalisée au moins au niveau du compartiment 8a.

Afin de faciliter le séchage du désinfectant liquide à l'intérieur du caisson de transport, on utilise avantageusement l'air produit par le ventilateur 9. Dans ce cas, pour éviter tout risque de contamination et de colmatage des filtres F1 à F4 en amont et en aval du ventilateur 9, sur chaque circuit d'air en sortie du caisson de transport 7, c'est-à-dire sur chaque conduite 15 est prévu un système d'aiguillage d'air 22 comportant d'une part une entrée 22a raccordée par l'intermédiaire de la conduite 15 avec l'ouverture d'échappement d'air 14 correspondante du caisson de transport 7, et deux sorties 22b et 22c, dont la première 22b est raccordée à l'entrée d'aspiration 9b du ventilateur 9, et dont la seconde 22c communique à l'air libre dans l'environnement ambiant du convoyeur. Chaque système d'aiguillage 22 est en outre équipé d'un clapet 22d permettant, soit d'aiguiller l'air depuis l'entrée du système d'aiguillage 22a vers la première sortie 22b (position du clapet illustrée en traits pleins à la figure 2), soit d'aiguiller l'air depuis l'entrée 22a du système d'aiguillage vers la seconde sortie 22c (position du clapet 22d représentée en pointillés sur la figure 2). Le clapet 22d peut être prévu pour être actionné manuellement ou pour être commandé automatiquement.

La mise en oeuvre des systèmes d'aiguillage 22 est réalisée de la manière suivante. Préalablement à la pulvérisation du désinfectant liquide à l'intérieur du caisson de transport 7, le ventilateur 9 est à l'arrêt et le clapet 22d de chaque système d'aiguillage 22 est réglé pour diriger l'air depuis l'entrée 22a vers la seconde sortie 22c à l'air libre. Ensuite on réalise la pulvérisation du désinfectant liquide à l'intérieur du caisson au moyen des buses de pulvérisation 20 et on attend éventuellement un laps de temps suffisant pour permettre au désinfectant d'agir. En final on met en oeuvre le ventilateur 9 pour sécher l'intérieur du caisson 7 avec de l'air propre aspiré par l'entrée d'admission d'air 16 et filtré par les filtres F1 à F4. Cet air est refoulé en circuit ouvert dans l'air libre en s'échappant par les sorties 22c de chaque système d'aiguillage jusqu'au séchage complet du convoyeur. Une fois ces opérations de nettoyage/séchage terminées, on remet en service le convoyeur après avoir basculé le clapet 22d de chaque système d'aiguillage 22 dans la position illustrée en traits pleins sur la figure 2, en sorte de mettre en communication l'entrée d'aspiration 9b du ventilateur avec l'intérieur du compartiment inférieur 8c du caisson de transport 7.

Le procédé de nettoyage qui vient d'être décrit présente l'avantage d'être facile et rapide à mettre en oeuvre et par là-même de ne pas immobiliser pendant un laps de temps trop important le convoyeur. Il permet en outre d'utiliser une quantité réduite de produit désinfectant et présente l'avantage de ne pas nécessiter un rinçage de l'intérieur du caisson de transport une fois le désinfectant pulvérisé.

L'invention n'est pas limitée à l'exemple préféré de réalisation qui vient d'être décrit en référence aux figures 1 et 2. Notamment, l'air repris par aspiration en sortie du caisson de transport 7 n'est pas nécessairement utilisé en circuit fermé. Il est en effet envisageable d'équiper le caisson de transport avec des moyens de reprise d'air par aspiration, sous la forme d'un ou plusieurs ventilateurs, qui sont distincts des moyens utilisés pour souffler l'air de transfert des récipients dans le compartiment de soufflage du caisson de transport, c'est-à-dire en l'occurrence du ventilateur 9. En outre, il est également envisageable dans le cadre de l'invention de prévoir des moyens d'aspiration / refoulement d'air, par exemple sous la forme d'un ventilateur, qui sont distincts du ventilateur 9, pour injecter un air propre complémentaire de celui repris par aspiration et réinjecté dans le caisson de transport. Dans ce cas ces moyens d'aspiration / refoulement seront d'une manière générale de préférence à débit réglables et seront pilotés par l'automate 18 en sorte de maintenir la pression mesurée à l'intérieur du compartiment de transport 8b à un niveau satisfaisant, c'est-à-dire au voisinage d'une pression de consigne, suffisamment importante pour permettre un convoyage rapide des récipients, mais suffisamment faible pour éviter des risques de blocage des récipients à l'intérieur du caisson de transport.

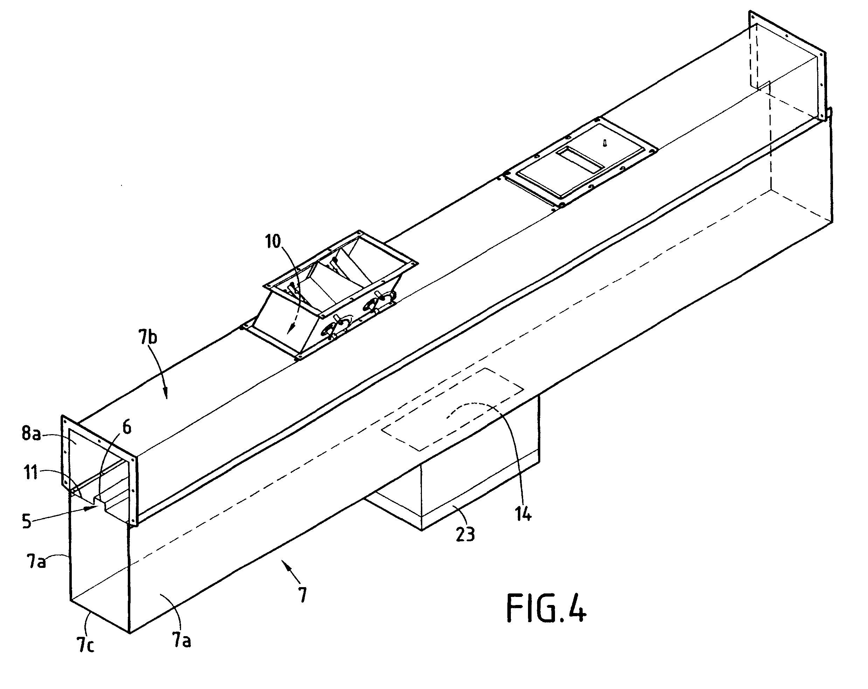

On a représenté à la figure 4, un tronçon de convoyeur selon une variante de réalisation simplifiée de l'invention. Par souci de simplification, les éléments structurels qui sont communs au tronçon de convoyeur de la figure 4 et au tronçon de convoyeur des figures 1 et 2 portent les mêmes références numériques. L'ouverture 10 prévue dans la paroi 7b du caisson de transport 7 du tronçon de la figure 4 est de la même manière que pour l'ouverture 10 du tronçon de convoyeur de la figure 1 prévue pour être raccordée à un ventilateur (non représenté sur la figure 4) permettant de mettre en pression le compartiment supérieur 8a du caisson de transport, et par là-même de créer les jets d'air de transport en direction des articles à convoyer.

La variante simplifiée de la figure 4 se caractérise par la mise en oeuvre d'une ouverture d'échappement d'air 14, qui contrairement aux ouvertures d'échappement d'air 14 de la variante des figures 1 et 2 n'est pas raccordée à des moyens de reprise par aspiration, mais qui au contraire débouche à l'air libre. On prévoira de préférence au moins une ouverture d'échappement d'air 14 par tronçon de convoyeur alimenté en air sous pression par un ventilateur. Cette ouverture d'échappement d'air 14 dans la variante de la figure 4 permet de faire communiquer l'intérieur du caisson de transport 7 avec l'air ambiant, et par là-même d'éviter une surpression importante à l'intérieur du caisson de transport 7 qui pourrait nuire à la convoyabilité des articles. De manière essentielle, chaque ouverture 14 d'échappement libre est équipée d'un filtre 23 qui a pour fonction de créer une perte de charge au niveau de l'ouverture 14 qui est suffisamment importante pour éviter la création d'un flux d'air induit entrant à travers cette ouverture 14. Si l'on supprime ce filtre 23, on constate que la mise en oeuvre des jets d'air pour le transport des articles à l'intérieur du caisson 7 génère de manière préjudiciable un flux d'air induit polluant, entrant à l'intérieur du caisson de transport 7 par l'intermédiaire de l'ouverture 14. Le filtre 23 est essentiel en ce qu'il permet, en créant une perte de charge suffisante, de faire obstacle à l'entrée à l'intérieur du caisson de transport 7 d'un tel flux d'air induit contaminant. Dans une autre variante de réalisation, le filtre 23, pourrait être remplacé par une vanne anti-retour ou une soupape anti-retour permettant, au delà d'un seuil de pression donné à l'intérieur du caisson, un échappement d'air unidirectionnel depuis l'intérieur du caisson de transport vers l'extérieur, tout en bloquant le passage à un flux d'air induit entrant.

## Revendications

1. Convoyeur pneumatique pour articles comportant une protubérance (3), le convoyeur comportant un canal de guidage (5) qui est apte à supporter les articles (2) par leur protubérance (3), et des moyens de transfert par jets d'air des articles le long du canal de guidage, **caractérisé en ce qu'**il comprend un caisson de transport (7) comportant deux parois latérales longitudinales (7a), une paroi supérieure (7b) et une paroi inférieure (7c), à l'intérieur duquel est logé le canal de guidage (5) et dans lequel les articles (2) sont destinés à être transportés, et **en ce que** dans une paroi du caisson de transport (7) est prévue au moins une ouverture (14) d'échappement d'air qui est raccordée à des moyens de reprise d'air par aspiration, ou qui débouche à l'air libre et est équipée d'un organe d'échappement unidirectionnel permettant un échappement d'air par cette ouverture depuis l'intérieur du caisson de transport vers l'extérieur, tout en bloquant le passage à un flux d'air induit entrant.

2. Convoyeur selon la revendication 1 **caractérisé en ce que** l'organe d'échappement unidirectionnel est constitué par un filtre (23) créant une perte de charge suffisante pour éviter la création d'un flux d'air induit entrant dans le caisson de transport.

3. Convoyeur selon la revendication 1 **caractérisé en ce que** l'organe d'échappement unidirectionnel est constitué par une vanne ou une soupape anti-retour.

4. Convoyeur selon l'une des revendications 1 à 3 **caractérisé en ce que** le caisson de transport (7) est étanche au moins à l'air et éventuellement aux liquides à l'exception uniquement de ses deux faces d'extrémité ouvertes (E,S) pour l'entrée et la sortie des récipients.

5. Convoyeur selon l'une des revendications 1 à 4 **caractérisé en ce que** le caisson se compose d'au moins deux compartiments, un premier compartiment de soufflage (8a) à l'intérieur duquel l'air de transfert des articles est soufflé, un deuxième compartiment de transport (8b) à l'intérieur duquel est logé le canal de guidage (5) et qui communique avec le compartiment de soufflage pour la formation des jets d'air de transfert en direction des articles.

6. Convoyeur selon la revendication 5 **caractérisé en ce qu'**il comprend un troisième compartiment (8c) au niveau duquel est localisé l'ouverture d'échappement d'air (14), et qui est séparé du deuxième compartiment (8b) de transport par une paroi de répartition d'air (12) pourvue d'une pluralité d'ouvertures (13).

7. Convoyeur selon l'une des revendications 1 à 6 **caractérisé en ce que** l'air repris par aspiration à l'intérieur du caisson de transport (7) par la ou les ouvertures d'échappement (14) est réutilisé en circuit fermé en étant refoulé à l'intérieur du caisson pour le transfert par jets d'air des articles.

8. Convoyeur selon la revendication 7 **caractérisé en ce que** les moyens de transfert par jets d'air et les moyens de reprise par aspiration de l'air à l'intérieur du caisson de transport comprennent au moins un ventilateur (9) dont l'entrée d'aspiration (9b)et la sortie de refoulement (9a) sont respectivement raccordées de manière étanche avec l'intérieur du caisson de transport (7).

9. Convoyeur selon la revendication 7 ou 8 **caractérisé en ce qu'**il comprend des moyens de filtration de l'air issu du caisson de transport.

10. Convoyeur selon l'une des revendications 7 à 9 **caractérisé en ce qu'**il comprend des moyens d'aspiration/refoulement qui communiquent en entrée (aspiration) avec l'air libre et en sortie (refoulement) avec l'intérieur du caisson de transport, qui sont équipés de moyens de filtration d'air (F1, F2), et qui permettent de réaliser un apport d'air propre complémentaire pour le transfert de articles.

11. Convoyeur selon les revendications 8 et 10 **caractérisé en ce que** le ventilateur (9) comprend une entrée d'admission d'air (16) communiquant à l'air libre et est équipé de moyens de filtration (F1, F2) en aval de cette entrée d'admission d'air.

12. Convoyeur selon la revendication 10 **caractérisé en ce que** les moyens d'aspiration/refoulement sont à débit d'air réglable, et **en ce que** le convoyeur comprend des moyens de réglage automatique (18) du débit d'air des moyens d'aspiration / refoulement en fonction d'une pression mesurée (P) dans le circuit d'air.

13. Convoyeur selon les revendications 11 et 12 **caractérisé en ce que** les moyens de réglage automatique (18) du débit d'air sont conçus pour ajuster la vitesse de rotation du moteur (19) du ventilateur (9).

14. Convoyeur selon la revendication 12 ou 13 **caractérisé en ce que** les moyens de réglage automatique (18) du débit d'air sont conçus pour maintenir la pression mesurée (P) à l'intérieur du caisson de transport (7) au voisinage d'une pression de consigne prédéterminée.

15. Convoyeur selon l'une quelconque des revendication 1 à 14 **caractérisé en ce que** le caisson de transport (7) est équipé d'une pluralité de buses (20) permettant de pulvériser un liquide sous forme de brouillard à l'intérieur du caisson de transport.

16. Convoyeur selon la revendication 15 et l'une quelconque des revendications 8 à 14 **caractérisé en ce que** sur chaque circuit d'air en sortie du caisson de transport (7) est prévue un système d'aiguillage d'air (22) comportant d'une part une entrée (22a) raccordée avec l'intérieur du caisson de transport (7), et deux sorties (22b, 22c) dont la première (22b) est raccordée à l'entrée (9b) (aspiration) de ventilateur (9) et la seconde (22c) communique à l'air libre, et d'autre part des moyens (22d) permettant soit d'aiguiller l'air depuis l'entrée (22a) du système d'aiguillage (22) vers la première sortie (22b), soit d'aiguiller l'air depuis l'entrée (22a) du système d'aiguillage (22) vers la seconde sortie (22c).

17. Ligne de convoyage pneumatique de récipients comportant un convoyeur selon l'une quelconque des revendications 1 à 16, dont le caisson de transport (7) est raccordé de manière étanche en amont et en aval.

18. Procédé de nettoyage d'un convoyeur visé à l'une quelconque des revendications 1 à 16 **caractérisé en ce qu'**il consiste à pulvériser sous forme de brouillard un désinfectant liquide à l'intérieur du caisson de transport (7), en sorte de saturer le caisson en produit désinfectant.

19. Procédé selon la revendication 18 pour le nettoyage d'un convoyeur visé à la revendication 13 **caractérisé en ce que** préalablement à la pulvérisation du désinfectant liquide, chaque système d'aiguillage d'air (22) est réglé pour aiguiller l'air depuis l'entrée (22a) vers la seconde sortie (22c) à l'air libre, **en ce qu'**après pulvérisation du désinfectant on attend éventuellement un laps de temps suffisant pour permettre au désinfectant d'agir, puis on met en oeuvre le ventilateur (9) pour sécher l'intérieur du caisson avec de l'air propre.

## Patentansprüche

1. Pneumatische Fördervorrichtung für Gegenstände, die eine Ausbeulung (3) aufweisen, wobei die Fördervorrichtung einen Führungskanal (5) zum Tragen der Gegenstände (2) mittels ihrer Ausbeulung (3) und Einrichtungen zum Transport der Gegenstände mittels Luftstrahlen entlang des Führungskanals umfasst, **dadurch gekennzeichnet, dass** sie einen Transportkasten (7) mit zwei longitudinalen Seitenwänden (7a), einer oberen Wand (7b) und einer unteren Wand (7c) aufweist in dessen Innern der Führungskanal (5) angeordnet ist und in dem die Gegenstände (2) transportiert werden sollen, und dass in einer Wand des Transportkastens (7) mindestens eine Luftauslassöffnung (14) vorgesehen ist, die mit Luftansaug-Einlasseinrichtungen verbunden ist oder in die freie Luft mündet und mit einem Organ für den Auslass in einer Richtung ausgestattet ist, welches das Entweichen von Luft durch diese Öffnung aus dem Innern des Transportkastens nach außen bei gleichzeitiger Blockierung des Durchgangs eines eintretenden Sekundärluftstroms erlaubt.

2. Fördervorrichtung nach Anspruch 1, **dadurch gekennzeichnet, dass** das Organ für den Auslass in einer Richtung besteht aus einem Filter (23), der einen ausreichenden Druckabfall erzeugt, um die Entstehung eines Sekundärluftstroms, der in den Transportkasten eintritt, zu vermeiden.

3. Fördervorrichtung nach Anspruch 1, **dadurch gekennzeichnet, dass** das Organ für den Auslass in einer Richtung aus einem Schieber oder einem Rückstromsicherungs-Ventil besteht.

4. Fördervorrichtung nach einem der Ansprüche 1 bis 3, **dadurch gekennzeichnet, dass** der Transportkasten (7) mindestens für Luft und gegebenenfalls für Flüssigkeiten undurchlässig ist mit Ausnahme lediglich seiner beiden offenen Stirnflächen (E,S) für den Eintritt und den Austritt der Behälter.

5. Fördervorrichtung nach einem der Ansprüche 1 bis 4, **dadurch gekennzeichnet, dass** der Kasten besteht aus mindestens zwei Abteilen, einem ersten Einblas-Abteil (8a), in dessen Innern die Luft für den Transport der Gegenstände eingeblasen wird, und einem zweiten Transportabteil (8b), in dessen Innern der Führungskanal (5) angeordnet ist und das mit dem Einblas-Abteil in Verbindung steht für die Erzeugung von Transport-Luftstrahlen in Richtung der Gegenstände.

6. Fördervorrichtung nach Anspruch 5, **dadurch gekennzeichnet, dass** sie ein drittes Abteil (8c) umfasst, in dessen Bereich die Luftauslassöffnung (14) angeordnet ist und das von dem zweiten Transportabteil (8b) durch eine Luftverteiler-Wand (12) getrennt ist, die mit einer Vielzahl von Öffnungen (13) ausgestattet ist.

7. Fördervorrichtung nach einem der Ansprüche 1 bis 6, **dadurch gekennzeichnet, dass** die durch Ansaugen ins Innere des Transportbehälters (7) aufgenommene Luft durch die Auslassöffnung(en) (14) in einem geschlossenen Kreislauf wieder verwendet wird durch Zurückdrängen ins Innere des Kastens für den Transport der Gegenstände durch die Luftstrahlen.

8. Fördervorrichtung nach Anspruch 7, **dadurch gekennzeichnet, dass** die Transporteinrichtungen durch Luftstrahlen und die Einlasseinrichtungen zum Ansaugen der Luft ins Innere des Transportkastens mindestens ein Gebläse (9) umfassen, dessen Ansaugeingang (9b) und dessen Ausstoßausgang (9a) jeweils abdichtend mit dem Innern des Transportkastens (7) verbunden sind.

9. Fördervorrichtung nach Anspruch 7 oder 8, **dadurch gekennzeichnet, dass** sie Einrichtungen zum Filtrieren der aus dem Transportkasten austretenden Luft umfasst.

10. Fördervorrichtung nach einem der Ansprüche 7 bis 9, **dadurch gekennzeichnet, dass** sie Ansaug/Ausstoß-Einrichtungen umfasst, die am Eingang (Ansaugung) mit der freien Luft und am Ausgang (Ausstoßung) mit dem Innern des Transportkastens in Verbindung stehen, die mit Einrichtungen zum Filtrieren der Luft (F1, F2) ausgestattet sind und die Realisierung einer komplementären Zufuhr von sauberer Luft für den Transport der Gegenstände erlauben.

11. Fördervorrichtung nach den Ansprüchen 8 und 10, **dadurch gekennzeichnet, dass** das Gebläse (9) einen Lufteinlasseingang (16) aufweist, der mit der freien Luft in Verbindung steht und mit Filtrationseinrichtungen (F1, F2) vor diesem Lufteinlasseingang ausgestattet ist.

12. Fördervorrichtung nach Anspruch 10, **dadurch gekennzeichnet, dass** die Ansaug/Ausstoß-Einrichtungen solche mit einer regelbaren Luft-Durchflussmenge sind und dass die Fördervorrichtung Einrichtungen (18) zur automatischen Regelung der Luft-Durchflussmenge für die Ansaug/Ausstoß-Einrichtungen in Abhängigkeit von dem in dem Luftkreislauf gemessenen Druck (P) umfasst.

13. Fördervorrichtung nach den Ansprüchen 11 und 12, **dadurch gekennzeichnet, dass** die Einrichtungen (18) zur automatischen Regelung der Luft-Durchflussmenge bestimmt sind zur Einstellung der Rotationsgeschwindigkeit des Motors (19) des Gebläses (9).

14. Fördervorrichtung nach Anspruch 12 oder 13, **dadurch gekennzeichnet, dass** die Einrichtungen (18) zur automatischen Regelung der Luft-Durchflussmenge dazu bestimmt sind, um den im Innern des Transportkastens (7) gemessenen Druck (P) in der Nähe eines vorgegebenen Einstelldruckes zu halten.

15. Fördervorrichtung nach einem der Ansprüche 1 bis 14, **dadurch gekennzeichnet, dass** der Transportkasten (7) mit einer Vielzahl von Düsen (20) ausgestattet ist, welche die Zerstäubung einer Flüssigkeit in Form eines Nebels im Innern des Transportkastens erlauben.

16. Fördervorrichtung nach Anspruch 15 und nach einem der Ansprüche 8 bis 14, **dadurch gekennzeichnet, dass** in jedem Luftkreislauf am Ausgang des Transportkastens (7) ein Luftverzweigungs-System (22) vorgesehen ist, das einerseits einen Eingang (22a), der mit dem Innern des Transportkastens (7) in Verbindung steht, und zwei Ausgänge (22b, 22c), von denen der erste Ausgang (22b) mit dem Eingang (9b) (Ansaugung) des Gebläses (9) in Verbindung steht, und der zweite Ausgang (22c) mit der freien Luft in Verbindung steht, und andererseits Einrichtungen (22d) aufweist, welche die Verzweigung der Luft ab dem Eingang (22a) des Luftverzweigungssystems (22) in den ersten Ausgang (22b) oder die Verzweigung der Luft ab dem Eingang (22a) des Verzweigungssystems (22) in den zweiten Ausgang (22c) erlaubt.

17. Leitung für den pneumatischen Transport von Behältern, die eine Fördervorrichtung nach einem der Ansprüche 1 bis 16 umfasst. deren Transportkasten (7) am oberen und unteren Ende abdichtend damit verbunden ist.

18. Verfahren zum Reinigen einer Fördervorrichtung nach einem der Ansprüche 1 bis 16, **dadurch gekennzeichnet, dass** es darin besteht, dass ein flüssiges Desinfektionsmittel im Innern des Transportkastens (7) in Form eines Nebels zerstäubt wird, um so den Kasten mit dem desinfizierenden Produkt zu sättigen.

19. Verfahren nach Anspruch 18 zur Reinigung einer Fördervorrichtung nach Anspruch 13, **dadurch gekennzeichnet, dass** vor dem Zerstäuben des flüssigen Desinfektionsmittels jedes Luftverzweigungssystem (22) so eingestellt wird, dass die Luft aus dem Eingang (22a) durch den zweiten Ausgang (22c) in die freie Luft gelenkt wird, und dass man nach der Zerstäubung des Desinfektionsmittels gegebenenfalls eine ausreichende Zeit wartet, um das Eintreten der Wirkung des Desinfektionsmittels zu erlauben, und dann das Gebläse (9) in Betrieb setzt, um das Innere des Kastens mit sauberer Luft zu trocknen.

## Claims

1. A pneumatic conveyor for articles each including a projection (3), the conveyor having a guide channel (5) suitable for supporting the articles (2) via their projections (3), and means for transferring articles along the guide channel by means of air jets, the conveyor being **characterised in that** it includes a transport box (7) having two longitudinal side walls (7a), a top wall (7b), and a bottom wall (7c), the guide channel (5) being housed inside the box and the articles (2) being designed to be transported inside the box, and **in that** a wall of the transport box (7) is provided with at least one air exhaust opening (14) which is connected to means for extracting air by suction or which opens out into the surrounding air and is fitted with a one-way exhaust member enabling air to be exhausted via said opening from the inside of the transport box towards the outside while preventing any incoming induced air flow from passing therethrough.

2. A conveyor according to claim 1, **characterised in that** the one-way exhaust member is constituted by a filter (23) creating sufficient head loss to prevent any incoming induced air flow from being created in the transport box.

3. A conveyor according to claim 1, **characterised in that** the one-way exhaust member is constituted by a non-return or check valve.

4. A conveyor according to one of claims 1 to 3, **characterised in that** the transport box (7) is at least air-tight and possibly also liquid-tight with the sole exception of its two open end faces (E, S) for receptacle entry and exit.

5. A conveyor according to one of claims 1 to 4, **characterised in that** the box is made up of at least two compartments: a blow first compartment (8a) into which the air for transferring the articles is blown; and a transport second compartment (8b) in which the guide channel (5) is housed and which communicates with the blow compartment to form transfer air jets directed towards the articles.

6. A conveyor according to claim 5, **characterised in that** it has a third compartment (8c) in which the air exhaust opening (14) is located, and which is separated from the transport second compartment (8b) by an air distribution wall (12) provided with a plurality of openings (13).

7. A conveyor according to one of claims 1 to 6, **characterised in that** the air extracted by suction from the inside of the transport box (7) via the exhaust opening(s) (14) is reused in a closed circuit by being delivered to the inside of the box to transfer articles by air jets.

8. A conveyor according to claim 7, **characterised in that** the air jet transfer means and the means for extracting air by suction from the inside of the transport box comprise at least one blower (9) whose suction inlet (9b) and whose delivery outlet (9a) are connected respectively in leakproof manner to the inside of the transport box (7).

9. A conveyor according to claim 7 or 8, **characterised in that** it includes means for filtering the air coming from the transport box.

10. A conveyor according to any one of claims 7 to 9, **characterised in that** it has suction-and-delivery means which communicate via an inlet (suction) with the surrounding air and via an outlet (delivery) with the inside of the transport box, which are fitted with air filter means (F1, F2), and which enable additional clean air to be delivered for transferring articles.

11. A conveyor according to claims 8 and 10, **characterised in that** the blower (9) has an air admission inlet (16) communicating with the surrounding air and is fitted with filter means (F1, F2) downstream from said air admission inlet.

12. A conveyor according to claim 10, **characterised in that** the suction-and-delivery means can provide an adjustable air flow rate, and **in that** the conveyor has automatic adjustment means (18) for adjusting the air flow rate from the suction-and-delivery means as a function of a pressure (P) measured in the air circuit.

13. A conveyor according to claims 11 and 12, **characterised in that** the automatic air flow rate adjustment means (18) are designed to adjust the speed of rotation of the motor (19) of the blower (9).

14. A conveyor according to claim 12 or 13, **characterised in that** the automatic air flow rate adjustment means (18) are designed to maintain the pressure (P) measured inside the transport box (7) in the vicinity of a predetermined reference pressure.

15. A conveyor according to any one of claims 1 to 14, **characterised in that** the transport box (7) is fitted with a plurality of nozzles (20) enabling a liquid to be sprayed in the form of a mist inside the transport box.

16. A conveyor according to claim 15 and any one of claims 8 to 14, **characterised in that** each outlet air circuit from the transport box (7) is provided with an air switching system (22) comprising firstly an inlet (22a) connected to the inside of the transport box (7), and two outlets (22b, 22c) with the first outlet (22b) being connected to the (suction) inlet (9b) of the blower (9) and with the second outlet (22c) communicating with the surrounding air, and secondly with means (22d) making it possible either to switch air from the inlet (22a) of the switching system (22) to the first outlet (22b), or else to switch air from the inlet (22a) of the switching system (22) to the second outlet (22c).

17. A pneumatic conveyor line for conveying receptacles, the line comprising a conveyor according to any one of claims 1 to 16, in which the transport box (7) is connected in leakproof manner at its upstream and downstream ends.

18. A method of cleaning a conveyor referred to in any one of claims 1 to 16, **characterised in that** it consists in spraying a liquid disinfectant in the form of a mist inside the transport box (7) so as to saturate the box with disinfectant.

19. A method according to claim 18 for cleaning a conveyor according to claim 13, **characterised in that** prior to spraying the liquid disinfectant, each air switching system (22) is set to switch air from its inlet (22a) to its second outlet (22c) leading to the surrounding air, **in that** after the disinfectant has been sprayed, a sufficient length of time is optionally allowed to lapse to enable the disinfectant to act, and then the blower (9) is put into operation to dry the inside of the box with clean air.
